# EUROPÄISCHE PATENTSCHRIFT

(11) **EP 0 778 461 B1**
(45) Veröffentlichungstag und Bekanntmachung des Hinweises auf die Patenterteilung: **27.08.2003**
(21) Anmeldenummer: 96117569.2
(22) Anmeldetag: 02.11.1996
(51) Int. Cl.: G01L 5/00, G01P 15/08

(54) **Verfahren zur Ermittlung von Fahrzeug-Überbeanspruchungen**
Procedure for determining overloading of a vehicle
Procédé de détermination de surcharge pour véhicule

(30) Priorität: 04.12.1995 DE 19545171; 26.01.1996 DE 19602816
(43) Veröffentlichungstag der Anmeldung: 11.06.1997
(73) Patentinhaber: Bayerische Motoren Werke Aktiengesellschaft, 80788 München (DE)
(72) Erfinder: Gruber, Siegfried, 85386 Eching (DE); Dippold, Jürgen, 80799 München (DE); Herschel, Gisbert, 80803 München (DE)

(56) Entgegenhaltungen:
- DE-A- 4 223 562
- DE-A- 4 226 010
- FR-A- 2 615 624
- US-A- 4 016 766
- US-A- 4 801 927
- US-A- 5 353 023

## Beschreibung

Die Erfindung bezieht sich auf ein Verfahren zur Ermittlung von Fahrzeug-Überbeanspruchungen.

Abhängig von der Betriebsweise werden Fahrzeuge unterschiedlich stark beansprucht. Beispielsweise führt ein Dauerbetrieb eines Fahrzeugs auf Autobahnen, auch dann wenn er mit hohem Fahrzeuggeschwindigkeit einhergeht, i.d.R. nicht zu einer übermäßigen Beanspruchung des Fahrzeugs bzw. von dessen Komponenten. Hierbei sind in erster Linie das Fahrwerk als ganzes und dessen Teile, aber auch Feder- und Dämpfungselemente sowie z.B. die Karosserie und deren Teile zu nennen. Andererseits ist ein Betrieb eines Fahrzeugs auf schlechten, z.B. mit Schlaglöchem und Fahrbahnunebenheiten versehenen Strassen auch dann wesentlich belastender für das Fahrzeug, wenn er bei Geschwindigkeiten stattfindet, die gegenüber einer Autobahnfahrt wesentlich geringer sind. Die Laufleistung eines Fahrzeugs ist daher kein Kriterium, um evtl. Überbeanspruchungen des Fahrzeugs zu erkennen.

In diesem Zusammenhang ist es aus der US 4,801,927 A bekannt, die momentane dynamische Instabilität einer Straßenbahn anhand der Querbeschleunigung der Räder zu erkennen. Eine Aussage über die Beanspruchung des Fahrzeugs über einen längeren Zeitraum ist dabei nicht vorgesehen.

Mit einem weiteren aus der DE 42 26 010 A bekannten Überwachungs-Verfahren wird zwar eine Aussage über die Lebensdauer von Fahrzeugteilen ermöglicht Dazu aber ist es vorgesehen, die Fahrzeugteile mit separaten Belastungsaufnehmem zu versehen.

Aus der FR-A-2 615 624 schließlich ist ein Verfahren der eingangs genannten Art bekannt, bei dem mehrere Beschleunigungsgeber verwendet und deren Ausgangssignale dann gezählt werden, wenn sie über vorgegebenen Schwellwerten liegen. Damit ist es zwar möglich, Aussagen über die Beanspruchung des Fahrzeugs zu erhalten. Eine zuverlässige Aussage über die Beanspruchung des Fahrwerks ist damit nicht möglich.

Der Erfindung liegt die Aufgabe zugrunde, ein Verfahren der eingangs genannten Art zu schaffen, das auf konstruktiv einfache Weise einen Rückschluss auf mögliche Fahrwerks-Überbeanspruchungen zulässt.

Die Erfindung löst diese Aufgabe durch die kennzeichnenden Merkmale des Patentanspruchs 1.

Im Rahmen der Erfindung spielt das einzelne Ereignis, bei dem eine Überbeanspruchung des Fahrzeugs vorliegt, keine besondere Rolle. Vielmehr kommt es auf die Summe derartiger Ereignisse an. Unter Summe ist dabei nicht oder zumindest nicht ausschliesslich die mathematische Addition mehrerer Ereignisse zu verstehen, bei denen eine Überbeanspruchung des Fahrzeugs auftritt. Vielmehr ist darunter der aus diesen Ereignissen gebildete Bewertungsindex zu verstehen, in den diese Ereignisse eingehen. Dieser Bewertungsindex ist ein guter Indikator für einen evtl. Fahrwerksschaden.

Dieser Fahrwerksschaden hat die Eigenschaft, dass er von außen nicht bzw. nicht ohne weiteres erkennbar ist. Er geht nicht oder zumindest nicht notwendigerweise einher mit einer irgendwie gearteten Verformung oder makroskopischen Beschädigung eines Fahrzeugteils. Andererseits aber ist bei Vorliegen einer Fahrwerks-Überbeanspruchung im Sinne der Erfindung die Notwendigkeit, eine Überprüfung des Fahrzeugs und evtl. auch vorsorglich einen Austausch von Fahrzeugteilen, wie beispielsweise eines Stossdämpfers vorzunehmen, gegeben bzw. absehbar.

Es hat sich gezeigt, dass eine Überprüfung einzelner Fahrzeugteile beispielsweise im Rahmen der regelmässigen Fahrzeugsicherheit-Untersuchungen die Gefahr nicht ausschliesst, lange vor Fälligkeit einer derartigen Untersuchung aufgrund von aussergewöhnlichen Überbeanspruchungen einen Austausch einzelner Fahrzeugteile vorzunehmen. Andernfalls ist ein sicherer weiterer Betrieb des Fahrzeugs nicht gewährleistet.

Die Bestimmung des Bewertungsindex kann aus den Ausgangssignalen des Beschleunigungsgebers auf unterschiedliche Weise vorgenommen werden. Beispiele hierfür finden sich in den Patentansprüchen 3 bis 8.

Besonders vorteilhaft ist dabei die Verbindung einer Bewertung hinsichtlich der Amplitude und der Dauer, da sich daraus der Energieeintrag in das Fahrzeug bestimmen lässt. Dieser Eintrag ist ein besonders gutes Mass für die Abschätzung, ob und in welchem Umfang Beschädigungen bzw. Gefährdungen des Fahrzeugs bzw. von Fahrzeugteilen zu erwarten sind.

Der Beschleunigungsgeber selbst kann ein im Fahrzeug ohnehin vorhandener Beschleunigungsgeber sein, der im Rahmen der Crash-Sensorik zum Auslösen eines Front- und/oder Seitenairbags eingesetzt wird. Daneben kommt auch ein Beschleunigungsgeber in Frage, der im Rahmen von elektronischen Dämpfkraft-Regelsystemen eingesetzt wird. Dieser ist aufgrund seiner Lage räumlich dem Fahrwerk und damit dem Teil des Fahrzeugs zugeordnet, das im Falle einer Überbeanspruchungen am ehesten gefährdet ist.

Die Verwendung eines einzigen Beschleunigungsgebers reicht lediglich für eine grobe Abschätzung einer Überbeanspruchung des Fahrzeugs aus. Verwendet man erfindungsgemäß mehrere Beschleunigungsgeber, so lässt sich durch Vergleich und/oder Summation ihrer bewerteten und summierten Ausgangssignale der Umfang der Überbeanspruchung des Fahrwerks und die Notwendigkeit einer evtl. Überprüfung und Reparatur eines Fahrzeugteils wesentlich genauer abschätzen.

Die Erfindung beschäftigt sich mit dem Problem, Überbeanspruchungen des Fahrwerks zu ermitteln. Bei Fahrwerken aus traditionellen Werkstoffen wie z. B. Stahl gehen Überbeanspruchungen von Fahrwerkskomponenten einher mit makroskopisch erkennbaren Veränderungen. Hier zu nennen sind lokale Defekte wie Deformationen oder mechanischen Anormalitäten oder Spur- und Stürzänderungen der Fahrzeugräder. Es besteht auch ein makroskopisch erkennbarer Zusammenhang zwischen dem Ausmass der Überbeanspruchung und dem auftretenden Defekt des Fahrwerks bzw der Fahrwerkskomponente. Mit dem Einsatz modemer Werkstoffe wie faserverstärkte Kunststoffe, Verbundwerkstoffe oder hochfeste Aluminiumlegierungen wird die Schadenserkennung an Fahrwerksbauteilen erschwert. Ursache ist die niedrige Duktilität dieser Bauteile. Bauteilschädigungen haben keine sichtbare Bauteildeformation zur Folge. Tritt eine Überbeanspruchung des Fahrwerks auf, beispielsweise wird ein Hindernis überfahren oder schleudert das Fahrzeug gegen einen Bordstein, fällt die Abschätzung schwer, ob tatsächlich eine ernstzunehmende Überbeanspruchung des Fahrwerks aufgetreten ist und ggf. einzelne Fahrwerkskomponenten bis hin zum kompletten Fahrwerk auszutauschen sind.

Unabhängig von der Wahl des jeweiligen Beschleunigungsgebers ist ein wesentliches Merkmal der Erfindung die bleibende, nicht löschbare Speicherung eines aufgetretenen Extremwerts der Beschleunigung. Unter Extremwert ist ein Mehrfaches zu verstehen. Es kann sich dabei um die maximale Amplitude des Beschleunigungsgeber-Ausgangssignals handeln. Ebenso kann die Zeitdauer, während der das Ausgangssignal über dem Grenzwert liegt, von Interesse sein. Auch weitere Parameter des Ausgangssignals, wie beispielsweise der Anstieg, der zeitliche Verlauf, das Frequenzverhalten sowie sämtliche, im Rahmen der Signalauswertung bekannten Informationen, die sich aus dem Ausgangssignal des Beschleunigungsgebers gewinnen lassen, können im Rahmen der Erfindung von Bedeutung sein.

Selbstverständlich sind die zu untersuchenden besonderen Parameter des jeweiligen Ausgangssignals auch abhängig vom Aufbau, der räumlichen Lage
und/oder der Arbeitsweise des Beschleunigungsgebers. Auch der besondere Aufbau des Fahrwerks sowohl hinsichtlich des Zusammenwirkens der
einzelnen Komponenten als auch hinsichtlich der i.d.R. vorhandenen und das Ausgangssignal des Beschleunigungsgebers beeinflussenden Elastizitäten
können von Interesse sein. Hierzu gehören die Elastizitäten des Reifens ebenso wie die von Gummilagem und dgl.

Zusätzlich zu den genannten fahrzeugmodellspezifischen Parametern können auch fahrzeugspezifische Parameter wie Beladung, Reifengrösse, Geschwindigkeit, und Fahrtrichtung des jeweiligen Fahrzeugs bei Auftreten eines Beschleunigungs-Extremwerts berücksichtigt und bei der Analyse zum Erkennen des Ausmaßes einer Fahrwerks-Überbeanspruchung herangezogen werden.

Weitere Informationen, die für das im Zusammenhang mit der Überbeanspruchung stehenden Geschehen von Bedeutung sein können, können ebenfalls abgespeichert werden. Hier sind Datum und Uhrzeit und/oder eine z. B. aus einem Navigationssystem abgeleitete Standortinformation in Verbindung mit dem festgehaltenen Extremwert des Beschleunigungsgebers zu nennen. Damit läßt sich auch der Zeitpunkt bzw. der Ort für ein evtl. Unfallgeschehen feststellen.

Die Erfindung ist anhand der Zeichnung weiter erläutert. Es zeigt
- Fig. 1: schematisch ein Kraftfahrzeug mit einem Beschleunigungsgeber,
- Fig. 2: das Ausgangssignal des Beschleunigungsgebers bei Auftreten einer über mäßigen Fahrwerksbeanspruchung.
- Fig. 3: den typischen Verlauf des Ausgangssignals eines Beschleunigungsgebers bei einer extremen Beanspruchung des Fahrzeugs und
- Fig. 4/5: die Auswertung und Bewertung dieses Signals im Rahmen der Erfindung

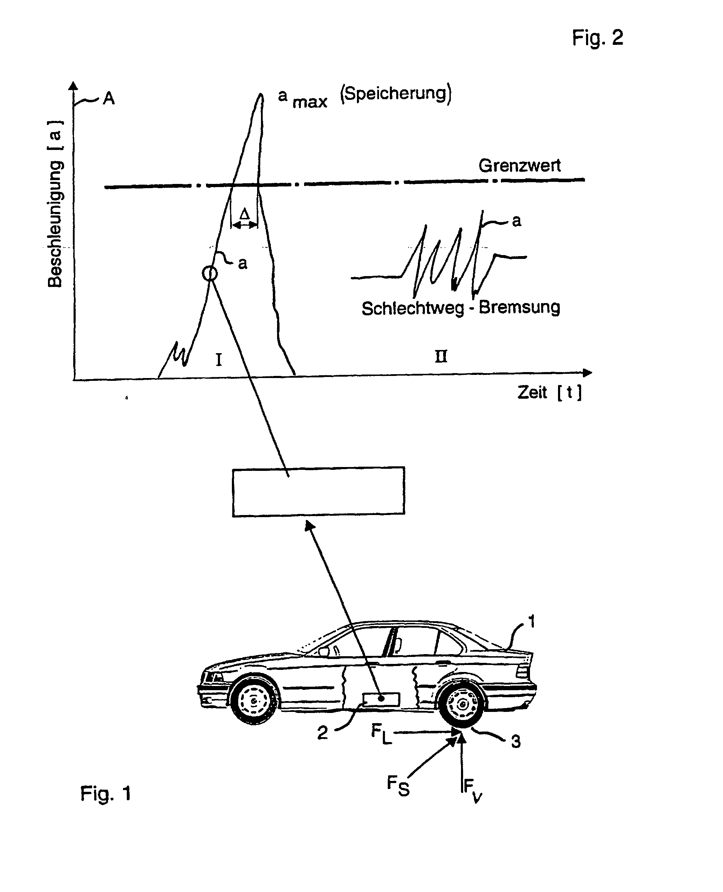

Das in Fig. 1 schematisch gezeigte Fahrzeug enthält einen zentralen Beschleunigungsgeber, bei dem es sich beispielsweise um den Auslösesensor für einen Airbag auf der Fahrer- und einen Airbag auf der Beifahrerseite (nicht dargestellt) handelt. Am in Fahrtrichtung gesehen linken Hinterrad 3 tritt eine Beanspruchung in Form einer Kraft auf, die über der bei normalem Gebrauch des Kraftfahrzeugs maximal auftretenden liegt. Bei dieser Kraft kann es sich um eine Kraft Fₗ in longitudinaler oder in vertikaler Richtung handeln. Ebenfalls durch einen Pfeil Fₛ ist eine Querkraft angedeutet. Dabei kann es sich um eine anormale Seitenkraft handeln, die beispielsweise beim Schleudem gegen einen Bordstein auftritt.

Ein typischer Signalverlauf für das Ausgangssignal des Beschleunigungsgebers 2 ist in Fig. 2 gezeigt. Das Ausgangssignal a zeigt nach einem Anstieg ein durch unterschiedliche Bauteil-Elastizitäten bedingtes kurzzeitiges Einschwingen, um dann erneut steil bis zu einem Maximalwert A anzusteigen. Daran schließt sich ein vergleichbar steiler Abfall bis auf den Wert 0 an. Zum Vergleich ist das Ausgangssignal a des Beschleunigungsgebers bei Befahren einer Schlechtwegstrecke und dort bei Durchführung einer Bremsung ebenfalls dargestellt.

Der Maximalwert des Ausgangssignals a für den Fall I liegt hinsichtlich seines Maximalwerts deutlich über den Extremwerten, wie sie im Fall II auftreten. Für die Auswertung und bleibende Speicherung in einem Festspeicher (nicht dargestellt) kommen verschiedene Charakteristika des Signals a in Frage. So ist es beispielsweise möglich, das Überschreiten eines Grenzwerts und die sich daran anschließende Zeitdauer bis zum Unterschreiten dieses Grenzwerts zu erfassen. Diese Zeitdauer ist mit Δ angedeutet. Auch ist es möglich, den Maximalwert A selbst abzuspeichern. Weitere Möglichkeiten sind, wie bereits ausgeführt, der Anstiegsgradient und das Frequenzverhalten des Signalverlaufs. Bei Verwendung eines Grenzwerts ist dieser in der Regel so zu wählen, daß er über dem Maximalwert liegt, der im Fall II auftritt. Grundsätzlich ist auch die vollständige Aufzeichnung des Signalverlaufes für eine definierte Zeitdauer, z. B. ausgelöst durch ein Triggersignal bei Überschreiten des Grenzwertes möglich.

Zusätzlich können weitere Informationen beispielsweise Uhrzeit, Standort, Fahrzeuggeschwindigkeit, usw. festgehalten werden, um auf diese Weise Standort und Ursache der Fahrwerk-Überbeanspruchung feststellen zu können.

Wie anhand eines einzigen Beschleunigungsgebers 2 dargestellt, ist auch möglich, die Ausgangssignale weiterer Beschleunigungsgeber ebenfalls bleibend festzuhalten und für sich und in Relation zu dem des Beschleunigungsgebers 2 zu untersuchen. Je nach Arbeitsweise und Anbringungsort dieser Beschleunigungsgeber ist es dann möglich, die Stoßrichtung zu analysieren, die Beschleunigungskomponente zu bestimmen und daraus eine ggf. geschädigte Fahrwerkskomponente und den Umfang ihrer Schädigung eindeutig zu identifizieren.

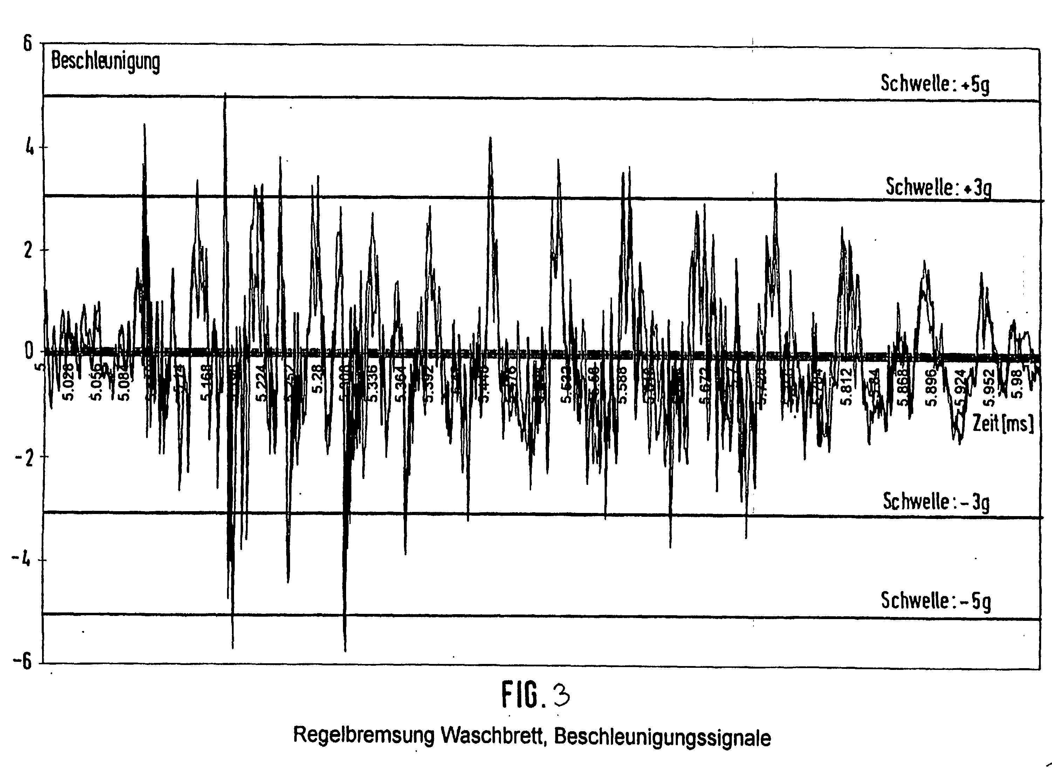

Das in Fig. 3 in seinem zeitlichen Verlauf dargestellte Ausgangssignal eines anderen Beschleunigungsgebers (nicht dargestellt), der beispielsweise ebenfalls im Rahmen einer Airbag-Elektronik eingesetzt ist, tritt beispielsweise bei einer starken Bremsung auf einer Fahrbahn auf, die als "Waschbrett" bezeichnet wird. Darunter ist ein Verlauf der Fahrbahnoberfläche zu verstehen, bei dem in regelmäßigen Abständen Fahrbahnerhebungen vorliegen. Die Beschleunigungswerte erreichen Werte von nahezu 6g, wobei Werte von etwa 3g besonders häufig auftreten.

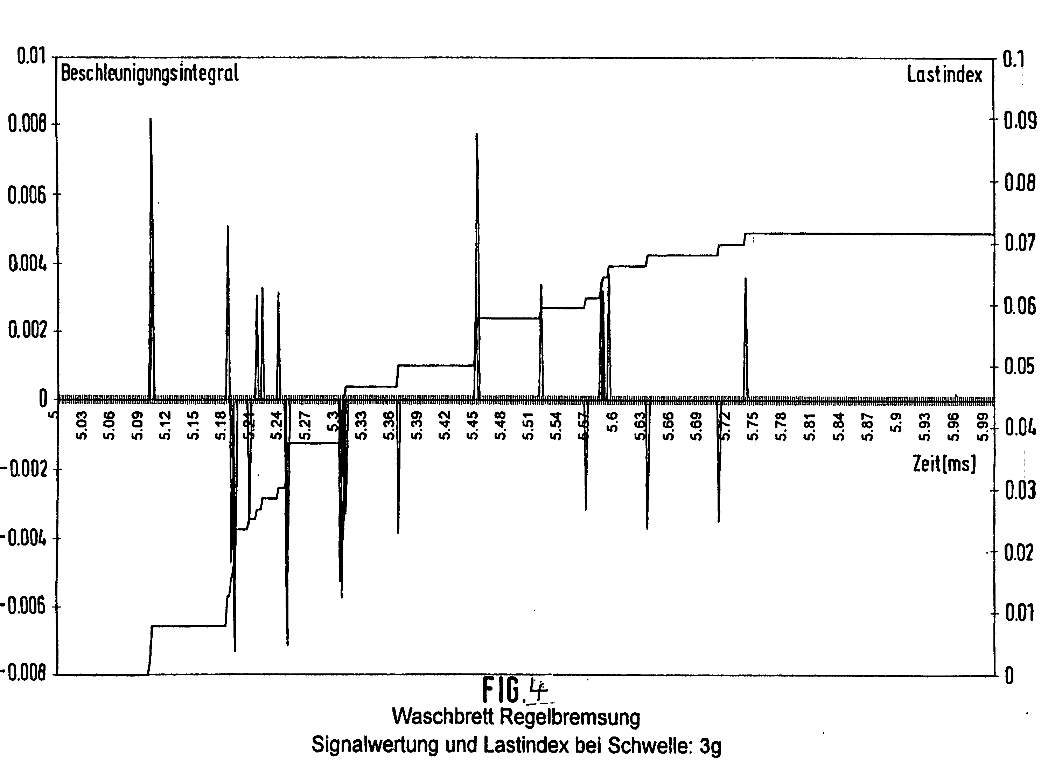

Ausgehend von Fahrtests hat sich ergeben, daß Beschleunigungswerte, die beispielsweise für das hier dargestellte Fahrzeug über 3g liegen, auf Dauer zu einer Schädigung von Fahrzeugteilen, beispielsweise am Fahrwerk, führen können. Dem wird Rechnung getragen, indem die betragsmäßig über 3g liegenden Beschleunigungen bewertet werden und die Summe dieser Bewertungen gebildet wird. Dies ist anhand von Fig. 4 erläutert.

In Fig. 4 ist die vorgenommene Bewertung der extremen Beschleunigungen beispielhaft gezeigt. Im einfachsten Fall findet eine Bewertung im Sinne einer zeitlichen Integration statt. Die dadurch gewonnene Integrale werden summiert. Es wird durch Berücksichtigung der Beschleunigungs-Amplituden und ihrer zeitlichen Dauer der Energieeintrag berechnet und die Summe dieser Einträge als "Lastindex" gebildet. Mit jedem Beschleunigungswert über 3g erfolgt die Integration und somit eine Erhöhung des Lastindex in einem Umfang, die gleich dem Energieeintrag der jeweiligen Integralen-Beschleunigungsspitze entspricht. Der Verlauf des Lastindex L ist in Fig. 4 ebenfalls dargestellt. Die Skala von 0 bis 0,1 soll lediglich zur Verdeutlichung dienen und beispielhaft sein.

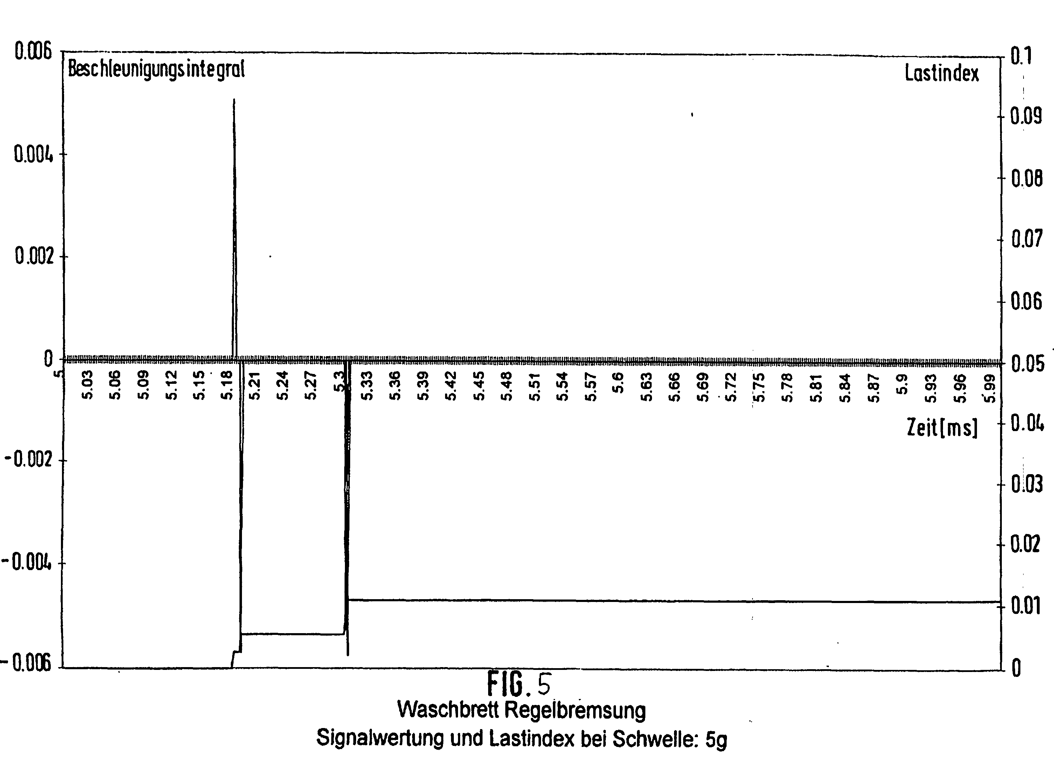

Zum Vergleich ist in Fig. 5 das Ergebnis gezeigt, das sich ergibt, wenn als Schwelle +/- 5g verwendet wird. Bezogen auf das in Fig. 3 dargestellte Beschleunigungssignal ergibt sich dann ein Lastindex, der wesentlich kleiner als in Fig. 4 ist. Tatsächlich werden bei Fig. 5 über den gesamten berücksichtigten Verlauf nur zwei Ereignisse bewertet, die betragsmäßig über 5g liegen.

Die Schwelle, hier 3 oder 5g, hängt von den jeweiligen Gegebenheiten des Fahrzeugs, der Lage des Beschleunigungssensors, seinem Ansprechverhalten usw. ab und kann anhand von Fahrversuchen ermittelt werden. Ergänzend können auch die Ausgangssignale weiterer Beschleunigungsgeber berücksichtigt werden. Auch die Bewertung und Summation der Ausgangssignale des bzw. der Beschleunigungsgeber (s) kann unterschiedlich von der dargestellten Methode und/oder bei mehreren Beschleunigungsgebem voneinander unterschiedlich sein. In jedem Fall ergibt sich bei Fahrzeugen mit einem oder mehreren Beschleunigungsgebem lediglich durch eine andere Auswertung der Ausgangssignale des Beschleunigungsgebers die Möglichkeit, nicht nur einen Crash und damit die Notwendigkeit für das Auslösen von Sicherheitseinrichtungen zu erkennen, sondern auch die Möglichkeit, evtl. und ebenfalls nicht erkennbare Beschädigungen des Fahrzeugs und seiner Teile festzustellen.

## Patentansprüche

1. Verfahren zur Ermittlung von Fahrzeug-Überbeanspruchungen mittels mehrerer Beschleunigungssensoren, deren Ausgangssignale dann bewertet werden, wenn sie über vorgegebenen Schwellwerten liegen, **dadurch gekennzeichnet, dass** zur Ermittlung von Fahrwerks-Überbeanspruchungen die Ausgangssignale eines dem Fahrwerk zugeordneten Beschleunigungsgebers dann bewertet werden, wenn sie über den im Fahrbetrieb normalerweise auftretenden Werten liegen, dass anhand der bewerteten Ausgangssignale ein für die Überbeanspruchung repräsentativer Bewertungsindex gebildet wird, und dass die Ausgangssignale mindestens eines weiteren Beschleunigungsgebers ebenfalls bleibend festgehalten und für sich und in Relation zu denen des erstgenannten Beschleunigungsgebers untersucht werden.

2. Verfahren zur Ermittlung von Fahrzeug-Überbeanspruchungen mittels mehrerer Beschleunigungssensoren, deren Ausgangssignale dann gezählt werden, wenn sie über vorgegebenen Schwellwerten liegen, **dadurch gekennzeichnet, dass** zur Ermittlung von Fahrwerks-Überbeanspruchungen die Ausgangssignale eines im Rahmen einer Airbag-Elektronik verwendeten Beschleunigungsgebers dann bewertet werden, wenn sie über den im Fahrbetrieb normalerweise auftretenden Werten liegen, dass anhand der bewerteten Ausgangssignale ein für die Überbeanspruchung repräsentativer Bewertungsindex gebildet wird, und dass die Ausgangssignale mindestens eines weiteren Beschleunigungsgebers ebenfalls bleibend festgehalten und für sich und in Relation zu dem des erstgenannten Beschleunigungsgebers untersucht werden.

3. Verfahren nach Anspruch 1 oder 2, **dadurch gekennzeichnet, dass** in den Bewertungsindex die betragsmäßig bewerteten Ausgangssignale eingehen.

4. Verfahren nach einem der Ansprüche 1 bis 3, **dadurch gekennzeichnet, dass** in den Bewertungsindex die hinsichtlich ihrer Amplitude bewerteten Ausgangssignale eingehen.

5. Verfahren nach Anspruch 4, **dadurch gekennzeichnet, dass** als Bewertungs index ein aus den zeitintegrierten Beschleunigungsspitzen gebildeter Lastindex verwendet wird.

6. Verfahren nach einem der Ansprüche 1 bis 5, **dadurch gekennzeichnet, dass** die Ausgangssignale der Beschleunigungsgeber integriert werden und die Summe der Integrale gebildet wird.

7. Verfahren nach einem der Ansprüche 1 bis 5, **dadurch gekennzeichnet, dass** die Zeitdauer, während der das Ausgangssignal des Beschleunigungsgebers über einem Grenzwert liegt, festgehalten wird.

8. Verfahren nach Anspruch 6 oder 7, **dadurch gekennzeichnet, dass** der Maximalwert des Ausgangssignals gespeichert wird.

9. Verfahren nach einem der Ansprüche 5 bis 8, **dadurch gekennzeichnet, dass** zusätzlich Datum und Uhrzeit für das Auftreten des Extremwerts gespeichert wird.

10. Verfahren nach einem der Ansprüche 5 bis 9, **dadurch gekennzeichnet, dass** zusätzlich eine Standortinformation des Fahrzeugs für das Auftreten des Extremwerts abgespeichert wird.

## Claims

1. A method for determining vehicle overloads by means of a plurality of acceleration sensors, of which the output signals are evaluated when they are above preselected threshold values, **characterised in that** to determine chassis overloads the output signals of an acceleration detector associated with the chassis are evaluated when they are above values normally occurring in driving operation, **in that** with the aid of the evaluated output signals an evaluation index which is representative of the overload is formed and **in that** the output signals of at least one further acceleration detector are also permanently recorded and investigated in themselves and in relation to those of the first-mentioned acceleration detector.

2. A method for determining vehicle overloads by means of a plurality of acceleration sensors, of which the output signals are metered when they are above preselected threshold values, **characterised in that** to determine chassis overloads the output signals of an acceleration detector used in the framework of airbag electronics are evaluated when they are above the values normally occurring in driving operation, **in that** with the aid of the evaluated output signals an evaluation index which is representative of the overload is formed and **in that** the output signals of at least one further acceleration detector are also permanently recorded and investigated in themselves and in relation to the first-mentioned acceleration detector.

3. A method according to claim 1 or 2, **characterised in that** the evaluation signals evaluated according to quantity are entered in the evaluation index.

4. A method according to any one of claims 1 to 3, **characterised in that** the output signals evaluated with respect to their amplitude are entered in the evaluation index.

5. A method according to claim 4, **characterised in that** a load index formed from the time-integrated acceleration peaks is used as the evaluation index.

6. A method according to any one of claims 1 to 5, **characterised in that** the output signals of the acceleration detectors are integrated and the sum of the integrals is formed.

7. A method according to any one of claims 1 to 5, **characterised in that** the time period during which the output signal of the acceleration detector is above a limit value is recorded.

8. A method according to claim 6 or 7, **characterised in that** the maximum value of the output signal is stored.

9. A method according to any one of claims 5 to 8, **characterised in that** the date and time are also stored for the occurrence of the extreme value.

10. A method according to any one of claims 5 to 9, **characterised in that** vehicle location information is stored for the occurrence of the extreme value.

## Revendications

1. Procédé de détermination des surcharges d'un véhicule au moyen de plusieurs accéléromètres dont les signaux de sortie sont évalués quand ils dépassent des valeurs de seuil prédéfinies,
**caractérisé en ce que**
pour déterminer des surcharges du véhicule, les signaux de sortie d'un accéléromètre associé au véhicule sont évalués quand ils dépassent des valeurs atteintes en circulation normale, on forme à partir de ces valeurs évaluées un indice d'évaluation représentant la surcharge, et les signaux de sortie d'au moins un autre accéléromètre sont également fixés durablement et examinés en eux-mêmes et en relation avec ceux du premier accéléromètre cité.

2. Procédé de détermination des surcharges d'un véhicule au moyen de plusieurs accéléromètres dont les signaux de sortie sont évalués quand ils dépassent des valeurs de seuil prédéfinies,
**caractérisé en ce que**
pour déterminer des surcharges de véhicule, les signaux de sortie d'un accéléromètre utilisé dans le cadre d'une électronique d'airbag, sont évalués quand ils dépassent des valeurs atteintes en circulation normale, on forme à partir de ces valeurs évaluées un indice d'évaluation représentant la surcharge, et les signaux de sortie d'au moins un autre accéléromètre sont également fixés durablement et examinées en eux-mêmes et en relation avec celui du premier accéléromètre cité.

3. Procédé selon la revendication 1 ou 2,
**caractérisé en ce que**
dans l'indice d'évaluation, les signaux de sortie sont introduits en étant évalués en fonction de leur grandeur.

4. Procédé selon l'une des revendications 1 à 3,
**caractérisé en ce que**
dans l'indice d'évaluation, les signaux de sortie sont évalués en fonction de leur amplitude.

5. Procédé selon une revendication 4,
**caractérisé en ce que**
on utilise comme indice d'évaluation, un indice de charge établi à partir des pointes d'accélération intégrées dans le temps.

6. Procédé selon l'une des revendications 1 à 5,
**caractérisé en ce que**
les signaux de sortie des accéléromètres sont intégrés et la somme des intégrales est formée.

7. Procédé selon les revendications 1 à 5,
**caractérisé en ce que**
la durée pendant laquelle le signal de sortie de l'accéléromètre dépasse une valeur limite, est déterminée.

8. Procédé selon la revendication 6 ou 7,
**caractérisé en ce que**
la valeur maximale du signal de sortie est enregistrée.

9. Procédé selon l'une des revendications 5 à 8,
**caractérisé en ce qu'**
en plus sont enregistrées la date et l'heure où la valeur extrême a été atteinte.

10. Procédé selon l'une des revendications 5 à 9,
**caractérisé en ce qu'**
en plus est enregistrée l'information concernant l'endroit où se trouvait le véhicule quand la valeur extrême a été atteinte.
